# EUROPEAN PATENT SPECIFICATION

(11) **EP 2 715 424 B1**
(45) Date of publication and mention of the grant of the patent: **14.08.2019**
(21) Application number: 12737617.6
(22) Date of filing: 30.05.2012
(51) Int. Cl.: G02B 6/38, G02B 6/42

(54) **OPTICAL FIBER CONNECTING STRUCTURE**
GLASFASERVERBINDUNGSSTRUKTUR
STRUCTURE DE CONNEXION DE FIBRE OPTIQUE

(30) Priority: 03.06.2011 JP 2011125199
(43) Date of publication of application: 09.04.2014
(73) Proprietor: Yazaki Corporation, Tokyo 108-0073 (JP)
(72) Inventor: IKEDA, Yukiyoshi, Susono-shi Shizuoka 410-1107 (JP)
(74) Representative: Hoffmann Eitle
(86) International application number: PCT/JP2012/003531
(87) International publication number: WO 2012/164922

(56) References cited:
- JP-A- 8 122 569
- US-A1- 2004 101 253
- US-A1- 2011 085 764
- US-B1- 7 706 657

## Description

### Technical Field

The present invention relates to an optical fiber connecting structure for connecting a connector for a terminal of an optical fiber with a connector on an optical signal receiver side.

### Background Art

For example, for coping with a larger capacity and a higher speed of in-vehicle transmission information, an optical communication system by an optical fiber cable has been adopted for an in-vehicle application. In such an optical communication system, an optical fiber connecting structure (including optical connector) is used for example to perform conversion between optical signals and electrical signals (see for example Patent Literature 1).

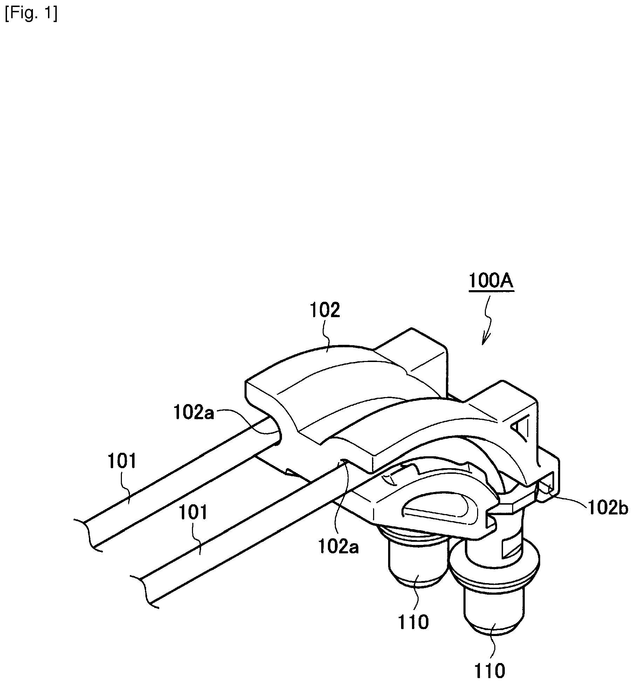

The optical fiber connecting structure includes for example a connector for a terminal of an optical fiber (hereinafter referred to as optical fiber terminal connector) and a connector on an optical transceiver (FOT: Fiber Optical Transceiver) side as an optical signal receiver. As a related optical fiber terminal connector 100A, as shown in Fig. 1, there exists one that uses an integrated protector 102 for a pair of optical fibers 101. The integrated protector 102 has two fiber receiving passages 102a for receiving the pair of optical fibers 101 and two ferrule holding grooves 102b for holding a pair of ferrules 110.

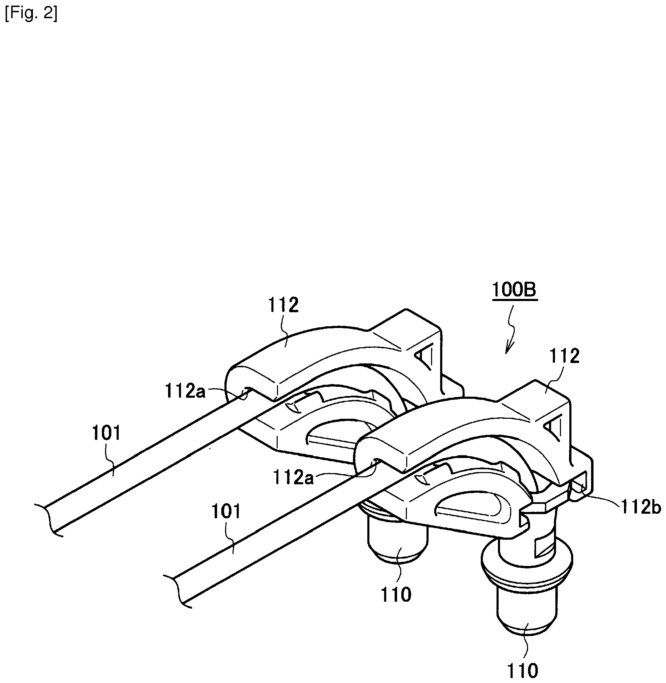

As another optical fiber terminal connector 100B, as shown in Fig. 2, there exists one that uses a pair of protectors 112 which are separate and independent. Each of the protectors 112 has one fiber receiving passage 112a for receiving one optical fiber 101 and one ferrule holding groove 112b for holding one ferrule 110.

The optical fiber terminal connector 100A as shown in Fig. 1 can be assembled to the connector (not shown) on the optical transceiver side at one time. However, the optical fiber terminal connector 100A cannot be subjected to an optical inspection after the ferrules 110 are assembled to the integrated protector 102. The optical fiber terminal connector 100B as shown in Fig. 2 can be subjected to an optical inspection even after each of the ferrules 110 is assembled to the corresponding protectors 102. However, the optical fiber terminal connector 100B cannot be assembled to the connector (not shown) on the optical transceiver side at one time.

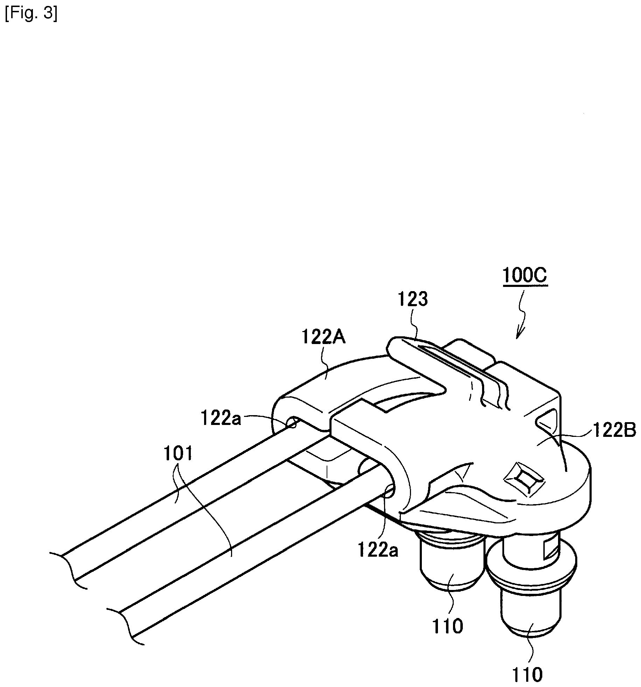

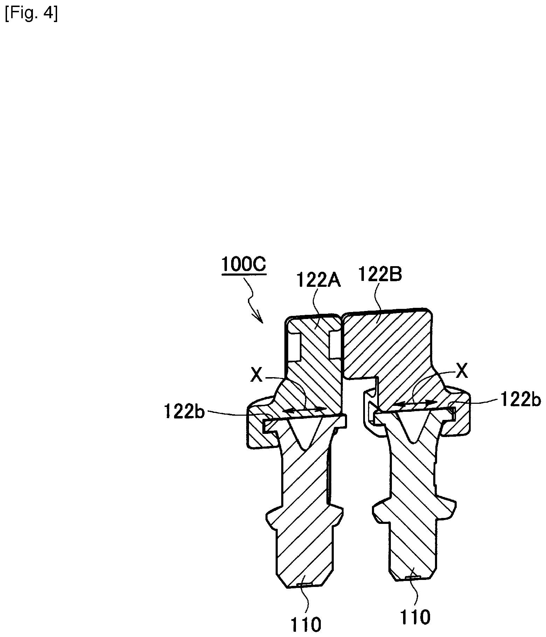

As an optical fiber terminal connector 100C for solving the above inconveniences, as shown in Fig. 3, one that uses a pair of protectors 122A, 122B which are adapted to be united with each other is provided. Each of the protectors 122A, 122B has one fiber receiving passage 122a for receiving one optical fiber 101 and one ferrule holding groove 122b (shown in Fig. 4) for holding one ferrule 110. The pair of protectors 122A, 122B are so made as to be united by a uniting lock 123.

The optical fiber terminal connector 100C can be subjected to an optical inspection even after each of the ferrules 110 is assembled to the corresponding protectors 122A, 122B. Further, the optical fiber terminal connector 100C can be assembled to a connector 130 on the optical transceiver (FOT: Fiber Optical Transceiver) side at one time.

### Citation List

### Patent Literature

[PTF 1] Japanese Unexamined Patent Application Publication No. 2008-203409

US 2011/0085764 A1, JP H08/122569 A, US 2004/0101253 A1, and US 7,706,657 B1 relate to connecting structures.

### Summary of Invention

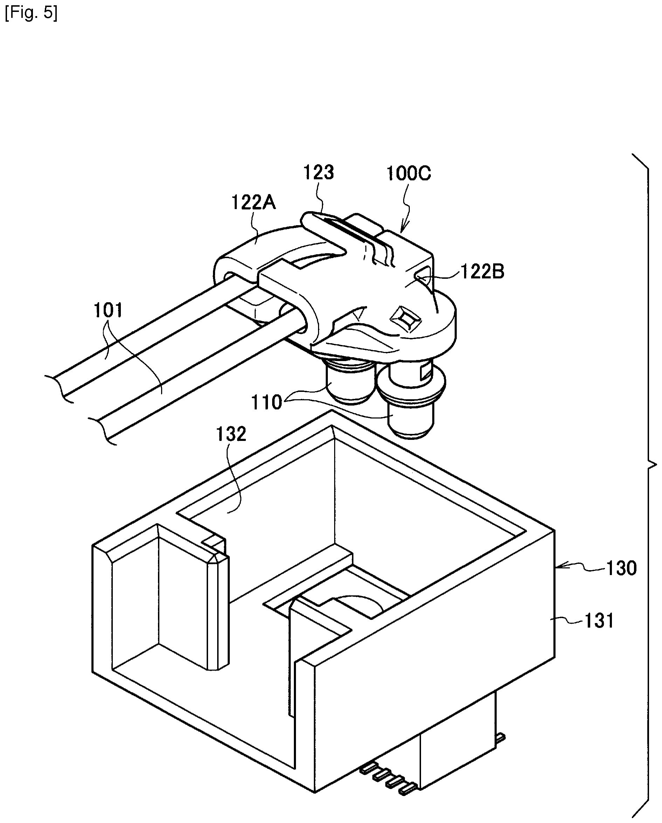

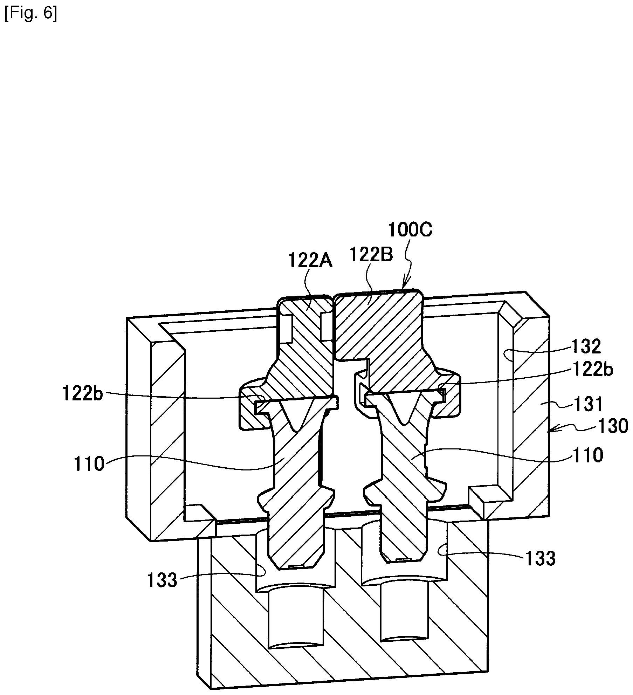

However, as shown in Fig. 4, the pair of protectors 122A, 122B are united in a state where opening sides of the respective ferrule holding grooves 122b are so disposed as to face each other. Thus, ferrules 110 held in the corresponding ferrule holding grooves 122b can move relative to the corresponding protectors 122A, 122B in an X-direction denoted by the arrows in Fig. 4. As shown in Fig. 5 and Fig. 6, the connector 130 on the optical transceiver side has an interface housing 131. The interface housing 131 is provided with a cavity 132 into which the optical fiber terminal connector 100C is inserted and a pair of ferrule receiving chambers 133 which open on the bottom face of the cavity 132. A pair of ferrule receivers (not shown) of the optical transceiver are respectively received in the pair of ferrule receiving chambers 133. Each ferrule 110 is inserted into one of the ferrule receivers (not shown). The pair of ferrule receivers (not shown) and the pair of ferrule receiving chambers 133 are each set to have a predetermined pitch interval.

When the optical fiber terminal connector 100C is inserted into the cavity 132, the pair of ferrules 110 can shift in a direction perpendicular to a direction of inserting the ferrules 110, and therefore, the pair of ferrules 110 cannot be smoothly inserted into the ferrule receivers (not shown).

It is an object of the present invention to provide an optical fiber connecting structure which enables easy insertion of a ferrule into a ferrule receiver.

The invention is defined by claim 1.

The interface housing may comprise a guide groove and a guide rib configured to guide the first connector upon insertion of the first connector into the cavity.

The plurality of ferrule holding members may comprise a mating concave portion and a mating convex portion configured to mate with each other when the plurality of ferrule holding members are united with each other.

With the above structure, when a plurality of united ferrule holding members are inserted into a cavity, a ferrule guide guides each ferrule to a proper receiving position of one of ferrule receivers, thus smoothly inserting each ferrule into one of the ferrule receivers. Consequently, the ferrule can be easily inserted into the ferrule receiver.

### Brief Description of Drawings

Fig. 1 shows a related example, which is a perspective view of an optical fiber terminal connector.
Fig. 2 shows another related example, which is a perspective view of an optical fiber terminal connector.
Fig. 3 shows still another related example, which is a perspective view of an optical fiber terminal connector.
Fig. 4 is a cross-sectional view of the optical fiber terminal connector as shown in Fig. 3.
Fig. 5 is a perspective view showing a state before the optical fiber terminal connector of Fig. 3 is received in an interface housing.
Fig. 6 is a cross-sectional view showing a state that the optical fiber terminal connector of Fig. 3 is received in the interface housing and shows features falling under the preamble of claim 1.
Fig. 7 is a perspective view of an optical fiber connecting structure according to one embodiment of the present invention.
Fig. 8 shows a perspective view of a pair of protectors before being united.
Fig. 9 shows a cross-sectional view of an optical fiber terminal connector.
Fig. 10 shows the embodiment of the present invention, which is a plan view showing a state that the optical fiber terminal connector is received in an interface housing.
Fig. 11 shows the embodiment of the present invention, which is a cross-sectional view showing a state that the optical fiber terminal connector is received in the interface housing.

### Description of Embodiments

Hereinafter, an embodiment of the present invention will be explained by referring to the drawings.

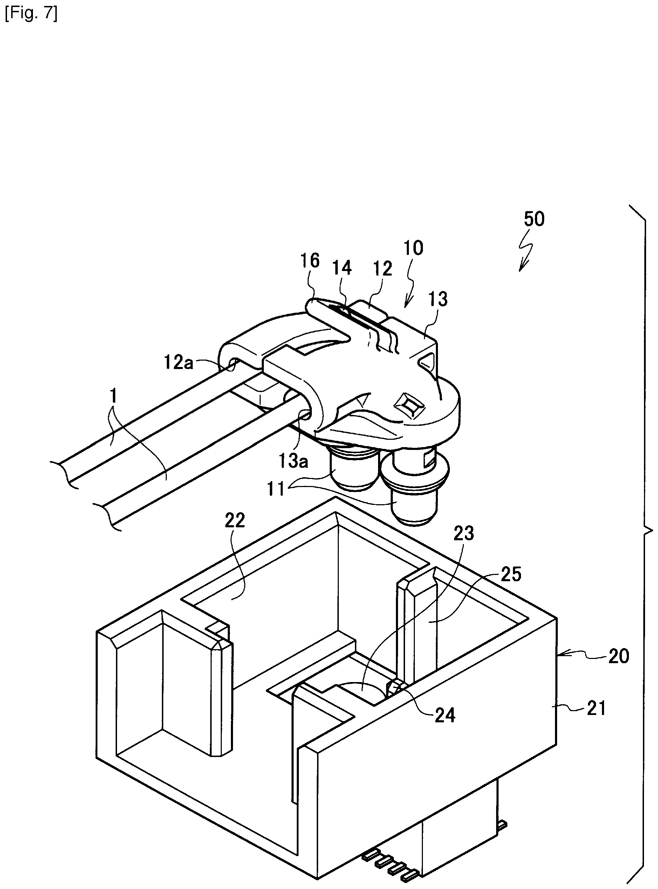

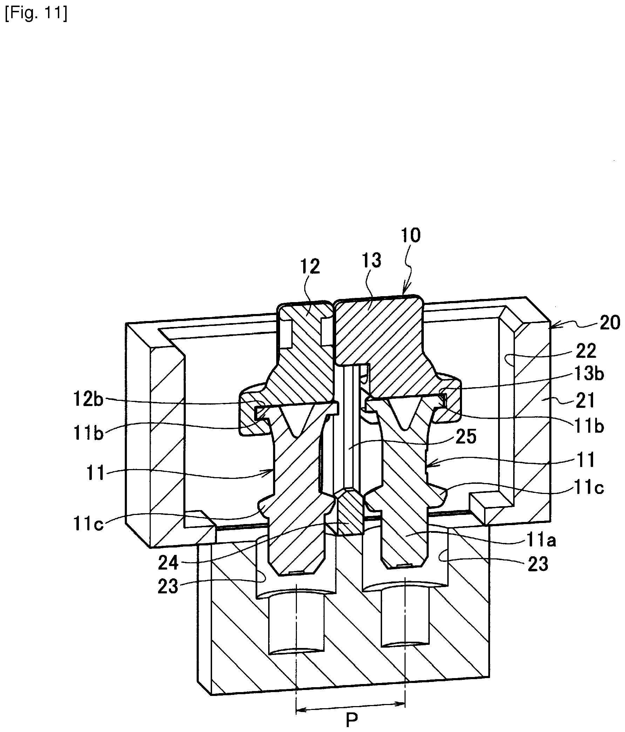

Fig. 7 to Fig. 11 show the embodiment of the present invention. As shown in Fig. 7, an optical fiber connecting structure 50 includes a connector 10 (a first connector) for a terminal of an optical fiber 1 (hereinafter referred to as optical fiber terminal connector) and a connector 20 (a second connector) on an optical transceiver side as an optical signal receiver.

The optical fiber terminal connector 10 is provided with a pair of ferrules 11 respectively connected to terminals of a pair of optical fibers 1, and first and second protectors 12, 13 as a pair of ferrule holders which can be united with each other.

Each ferrule 11 has a ferrule body 11a, a holding flange portion 11b protruding from an outer periphery of the ferrule body 11a, and an over-insertion preventing flange portion 11c protruding from the outer periphery of the ferrule body 11a.

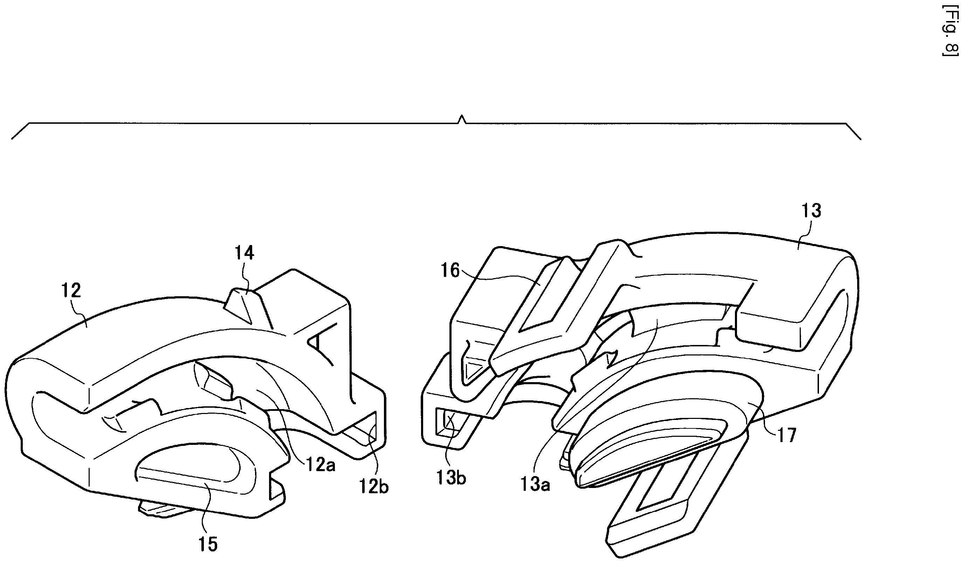

As shown in detail in Fig. 7 and Fig. 8, the protectors 12, 13 are respectively provided with fiber receiving passages 12a, 13a which receive the optical fiber 1 along a predetermined wiring path and protect the optical fiber 1, and ferrule holding grooves 12b, 13b which are provided continuously with the fiber receiving passages 12a, 13a and hold the ferrules 11. Each of the fiber receiving passages 12a, 13a is so curved as to change, at both end positions thereof, a direction of the optical fiber 1 by 90 degrees. Each of the ferrule holding grooves 12b, 13b receives and holds the holding flange portion 11b of the ferrule 11.

The first protector 12 is provided with a lock nail 14 and a mating concave portion 15. The second protector 13 is provided with a lock frame body 16 and a mating convex portion 17. The mating concave portion 15 and the mating convex portion 17 are respectively configured to have a generally crescent shape and have a configuration that is not point-symmetric around an arbitrary point. By this configuration, the mating concave portion 15 and mating convex portion 17, when in a mated state, can prevent rotation between the mating concave portion 15 and mating convex portion 17.

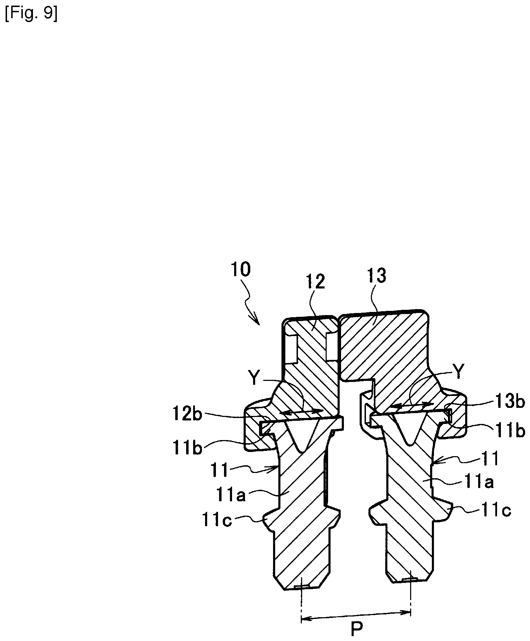

The pair of protectors 12, 13 are united with each other by mating the mating convex portion 17 into the mating concave portion 15 and engaging the lock nail 14 with the lock frame body 16. In the united state of the protectors 12, 13, opening faces of the respective ferrule holding grooves 12b, 13b are so disposed as to face each other. This prevents drop-off of the pair of ferrules 11 from the respective ferrule holding grooves 12b, 13b. As shown by the arrows Y in Fig. 9, each ferrule 11 can shift in a direction perpendicular to an axial direction of the ferrule 11 due to a gap between the ferrule holding groove 12b and the ferrule holding groove 13b and others. A pitch interval between the pair of ferrules 11 is set to a desired pitch interval P (i.e., a pitch interval P of ferrule receivers described below) in a state where outer faces of the respective holding flange portions 11b abut corresponding outer end faces of the ferrule holding grooves 12b, 13b.

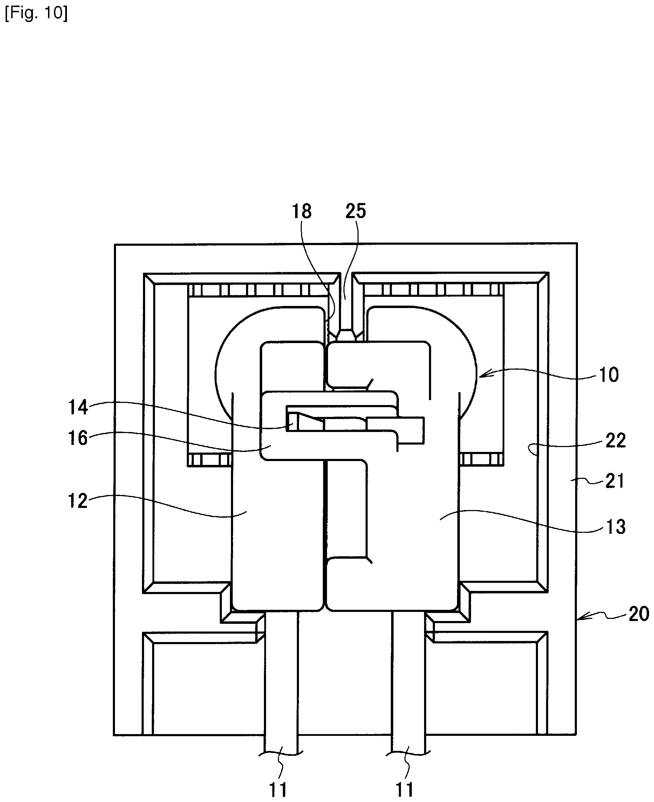

In the pair of protectors 12, 13 as united, there is formed a guide groove 18 (shown in Fig. 10) into which a guide rib 25 to be described below is inserted.

As shown in Fig. 7, Fig. 10 and Fig. 11, the connector 20 on the optical transceiver side has an interface housing 21. The interface housing 21 is provided with a cavity 22 into which the optical fiber terminal connector 10 is inserted and a pair of ferrule receiving chambers 23 which open on the bottom face of the cavity 22. A pair of ferrule receivers (not shown) of the optical transceiver are respectively received in the pair of ferrule receiving chambers 23. Each of the ferrules 11 is inserted into one of the ferrule receivers (not shown). The pair of ferrule receivers (not shown) and the pair of ferrule receiving chambers 23 are so set as to have a predetermined pitch interval P.

In the interface housing 21, a ferrule guide 24 protrudes upward in the cavity 22 from between the pair of ferrule receiving chambers 23, 23. The ferrule guide 24 is positioned between the pair of ferrules 11 to be inserted, controls an interval between the pair of ferrules 11 to the desired pitch interval P, and guides the ferrules 11 to proper receiving positions of the pair of ferrule receivers (not shown).

In the interface housing 21, there is provided a guide rib 25 which extends from the ferrule guide 24 toward an opening side of the cavity 22.

Next, the operation of connecting the optical fiber terminal connector 10 to the connector 20 on the optical transceiver side will be explained. The optical fibers 1 and the ferrules 11 that are connected to the terminals of the optical fibers 1 are assembled to the protectors 12, 13 respectively. Then, the pair of protectors 12, 13 are united with each other. Thus, the optical fiber terminal connector 10 is prepared (see Fig. 7).

Next, the optical fiber terminal connector 10 is inserted into the cavity 22 of the interface housing 21, with the pair of ferrules 11 as the insertion tip. Here, the guide rib 25 on the cavity 22 side is aligned with a guide groove 18 of the optical fiber terminal connector 10 to thereby accomplish the above inserting. By this operation, the optical fiber terminal connector 10 is inserted in a proper position without visual observation of the inserting position of the pair of ferrules 11. When the pair of ferrules 11 do not have the desired pitch interval P, the over-insertion preventing flange portion 11c of any one or both of the pair of ferrules 11 interfere with the ferrule guide 24. The interfered ferrule 11, when receiving a pressure from the ferrule guide 24, shifts to a position in which the ferrules 11 have the desired pitch interval P. That is, since the ferrule guide 24 guides the pair of ferrules 11 to the pitch interval of the ferrule receivers (not shown), the pair of ferrules 11 can be smoothly inserted into the pair of ferrule receivers (not shown) without causing any interference and the like.

As explained above, the interface housing 21 is provided with the ferrule guide 24 which guides each ferrule 11 to a proper inserting position of the ferrule receiver (not shown). Thus, it makes it possible to insert the ferrule 11 into the ferrule receiver (not shown) easily.

The protectors 12, 13 respectively have ferrule holding grooves 12b, 13b for inserting therein the ferrule 11 in the direction perpendicular to the axial direction of the ferrule 11. The pair of protectors 12, 13 are united in a state where the opening faces of the respective ferrule holding grooves 12b, 13b are so disposed as to face each other. The ferrule guide 24 is positioned between the pair of ferrules 11 to be inserted into the cavity 22 and guides the interval of the pair of ferrules 11 so that the ferrules 11 can have the desired pitch interval P. Thus, a single ferrule guide 24 can guide the pair of ferrules 11 to the desired pitch interval P.

The interface housing 21 is provided with the guide rib 25 extending along a direction of inserting the optical fiber terminal connector 10, and the pair of protectors 12, 13 as united is provided with the guide groove 18 into which the guide rib 25 is inserted. Thus, the pair of protectors 12, 13 as united can be inserted into the proper inserting position without visual observation of the ferrules 11. The guide groove 18 may be provided at the interface housing 21 while the guide rib 25 may be provided at the pair of protectors 12, 13 as united.

The first protector 12 is provided with the mating concave portion 15 while the second protector 13 is provided with the mating convex portion 17. The mating concave portion 15 and the mating convex portion 17 are mated with each other when the first and second protectors 12, 13 are united with each other. Thus, the pair of protectors 12, 13 can be united without backlash. The mating concave portion 15 and the mating convex portion 17 are respectively configured such that they are not point-symmetric, thus preventing the pair of protectors 12, 13 as united from making a relative rotation in the mated state.

According to this embodiment, the pair of protectors 12, 13 as united are inserted into the cavity 22 of the interface housing 21. However, each of the protectors 12, 13 may be separately inserted without uniting. In this case as well, the ferrule guide 24 guides each ferrule 11 to a proper receiving position of the ferrule receiver (not shown).

According to this embodiment, two optical fibers 1 are provided, however, it is applicable to three or more optical fibers 1.

According to this embodiment, the optical fiber connecting structure 50 implements the conversion between optical signals and electrical signals. However, it is also applicable to another optical fiber connecting structure which implements connection between optical fibers.

Although the present invention has been described above by reference to the embodiment, the present invention is not limited to those and the configuration of parts can be replaced with any configuration having a similar function, as long as they lie within the scope of the claims.

## Claims

1. An optical fiber connecting structure (50), comprising:
a first connector (10) for a terminal of an optical fiber (1), comprising a plurality of ferrule holding members (12, 13) each holding a ferrule (11) and being unitable with each other; and
a second connector (20) on an optical signal receiver side, comprising an interface housing (21) with a cavity (22) for insertion of the first connector (10), the interface housing (21) in which a plurality of ferrule receivers (23) for insertion of the ferrules (11) are disposed,
wherein each of the plurality of ferrule holding members (12, 13) comprises a ferrule holding groove (12b, 13b) for insertion of the corresponding ferrule (11) in a direction perpendicular to an axial direction of the corresponding ferrule (11),
wherein the plurality of ferrule holding members (12, 13) are united to each other with opening faces of the ferrule holding grooves (12b, 13b) being disposed to face each other, and
**characterized in that**
the interface housing (21) comprises a ferrule guide (24) configured to guide each of the ferrules (11) to a proper insertion position upon insertion of the first connector (10) into the cavity (22),
wherein the ferrule guide (24) comes at a position between the ferrules (11) being inserted into the cavity (22) to guide an interval of the ferrules (11) to a predetermined pitch interval.

2. The optical fiber connecting structure (50) according to claim 1, wherein the plurality of ferrule holding members (12, 13) as united and the interface housing (21) comprise a guide groove (18) and a guide rib (25) configured to guide the first connector (10) upon insertion of the first connector (10) into the cavity (22) .

3. The optical fiber connecting structure (50) according to claim 1, wherein the plurality of ferrule holding members (12, 13) comprise a mating concave portion (15) and a mating convex portion (17) configured to mate with each other when the plurality of ferrule holding members (12, 13) are united with each other.

4. The optical fiber connecting structure (50) according to claim 3, wherein the mating concave portion (15) and the mating convex portion (17) are respectively configured so as not to be point-symmetric.

## Patentansprüche

1. Glasfaserverbindungsstruktur (50), umfassend:
einen ersten Verbinder (10) für eine Anschlussklemme einer Glasfaser (1), umfassend eine Vielzahl von Zwingenhalterungselementen (12, 13), die jeweils eine Zwinge (11) halten und miteinander vereinbar sind; und
einen zweiten Verbinder (20) an einer Lichtsignalempfängerseite, umfassend ein Schnittstellengehäuse (21) mit einem Hohlraum (22) zum Einsetzen des ersten Verbinders (10), wobei in dem Schnittstellengehäuse (21) eine Vielzahl von Zwingenaufnahmen (23) zum Einsetzen der Zwingen (11) angeordnet sind;
wobei jedes der Vielzahl von Zwingenhalterungselementen (12, 13) eine Zwingenhalterungsrille (12b, 13b) zum Einsetzen der entsprechenden Zwinge (11) in einer Richtung senkrecht zu einer Axialrichtung der entsprechenden Zwinge (11) umfasst,
wobei die Vielzahl von Zwingenhalterungselementen (12, 13) miteinander vereint sind, wobei sich öffnende Flächen der Zwingenhalterungsrillen (12b, 13b) einander zugewandt angeordnet sind, und
**dadurch gekennzeichnet, dass**
das Schnittstellengehäuse (21) eine Zwingenführung (24) umfasst, die konfiguriert ist, jede der Zwingen (11) zu einer richtigen Einsetzposition bei Einsetzen des ersten Verbinders (10) in den Hohlraum (22) zu führen,
wobei die Zwingenführung (24) an einer Position zwischen den Zwingen (11) liegt, die in den Hohlraum (22) eingeführt werden, um einen Abstand der Zwingen (11) zu einem vorbestimmten Teilungsabstand zu führen.

2. Glasfaserverbindungsstruktur (50) nach Anspruch 1, wobei die Vielzahl von Zwingenhalterungselementen (12, 13) im vereinten Zustand und das Schnittstellengehäuse (21) eine Führungsrille (18) und eine Führungsrippe (25) umfassen, die konfiguriert sind, den ersten Verbinder (10) bei Einsetzen des ersten Verbinders (10) in den Hohlraum (22) zu führen.

3. Glasfaserverbindungsstruktur (50) nach Anspruch 1, wobei die Vielzahl von Zwingenhalterungselementen (12, 13) einen passenden konkaven Abschnitt (15) und einen passenden konvexen Abschnitt (17) umfassen, die konfiguriert sind, zueinander zu passen, wenn die Vielzahl von Zwingenhalterungselementen (12, 13) miteinander vereint sind.

4. Glasfaserverbindungsstruktur (50) nach Anspruch 3, wobei der passende konkave Abschnitt (15) und der passende konvexe Abschnitt (17) jeweils konfiguriert sind, nicht punktsymmetrisch zu sein.

## Revendications

1. Structure de connexion de fibre optique (50), comprenant :
un premier connecteur (10) pour une borne d'une fibre optique (1), comprenant une pluralité d'éléments de maintien de virole (12, 13) chacun maintenant une virole (11) et pouvant être uni les uns aux autres ; et
un second connecteur (20) sur un côté récepteur de signal optique, comprenant un logement d'interface (21) avec une cavité (22) pour insertion du premier connecteur (10), logement d'interface (21) dans lequel une pluralité de récepteurs de viroles (23) pour insertion des viroles (11) est disposée,
dans laquelle chacun de la pluralité d'éléments de maintien de viroles (12, 13) comprend une rainure de maintien de virole (12b, 13b) pour insertion de la virole correspondante (11) dans une direction perpendiculaire à une direction axiale de la virole correspondante (11),
dans laquelle la pluralité d'éléments de maintien de viroles (12, 13) sont unis les uns aux autres, des faces d'ouverture des rainures de maintien de viroles (12b, 13b) étant disposées pour se faire face, et
**caractérisée en ce que**
le logement d'interface (21) comprend un guide-virole (24) configuré pour guider chacune des viroles (11) dans une position d'insertion appropriée lors de l'insertion du premier connecteur (10) dans la cavité (22),
dans laquelle le guide-virole (24) vient dans une position entre les viroles (11) où il est inséré dans la cavité (22) pour guider un intervalle des viroles (11) dans un intervalle de pas prédéterminé.

2. Structure de connexion de fibre optique (50) selon la revendication 1, dans laquelle la pluralité d'éléments de maintien de viroles (12, 13) tels qu'ils sont unis et le logement d'interface (21) comprennent une rainure de guide (18) et une nervure de guide (25) configurées pour guider le premier connecteur (10) lors de l'insertion du premier connecteur (10) dans la cavité (22).

3. Structure de connexion de fibre optique (50) selon la revendication 1, dans laquelle la pluralité d'éléments de maintien de viroles (12, 13) comprend une partie concave d'accouplement (15) et une partie convexe d'accouplement (17) configurées pour s'accoupler l'une avec l'autre quand la pluralité d'éléments de maintien de viroles (12, 13) sont unis les uns aux autres.

4. Structure de connexion de fibre optique (50) selon la revendication 3, dans laquelle la partie concave d'accouplement (15) et la partie convexe d'accouplement (17) sont respectivement configurées afin de ne pas être à symétrie ponctuelle.
